Europäisches Patentamt

European Patent Office

Office européen des brevets

(19)

(11) **EP 1 334 641 B1**

(12) **EUROPÄISCHE PATENTSCHRIFT**

(45) Veröffentlichungstag und Bekanntmachung des Hinweises auf die Patenterteilung:
**25.08.2004 Patentblatt 2004/35**

(21) Anmeldenummer: **01993372.0**

(22) Anmeldetag: **13.11.2001**

(51) Int Cl.⁷: **H04Q 7/38**, G01S 5/14

(86) Internationale Anmeldenummer:
**PCT/DE2001/004254**

(87) Internationale Veröffentlichungsnummer:
**WO 2002/039773 (16.05.2002 Gazette 2002/20)**

(54) **VERFAHREN UND VORRICHTUNG ZUR VERKEHRSLOKALISIERUNG IN EINEM ZELLULÄREN MOBILFUNKNETZ**

METHOD AND DEVICE FOR TRAFFIC LOCALISATION IN A CELLULAR MOBILE RADIO NETWORK

PROCEDE ET DISPOSITIF DE LOCALISATION DU TRAFIC DANS UN RESEAU DE TELEPHONIE MOBILE CELLULAIRE

(84) Benannte Vertragsstaaten:
**DE FR GB**

(30) Priorität: **13.11.2000 DE 10056222**

(43) Veröffentlichungstag der Anmeldung:
**13.08.2003 Patentblatt 2003/33**

(73) Patentinhaber: **Siemens Aktiengesellschaft**
**80333 München (DE)**

(72) Erfinder: **MAJEWSKI, Kurt**
**81541 München (DE)**

(56) Entgegenhaltungen:
WO-A-98/15149          WO-A-98/23115
DE-A- 19 934 845       US-A- 6 026 304

• JUNIUS M ET AL: "New methods for processing GSM radio measurement data: applications for locating, handover, and network management" VEHICULAR TECHNOLOGY CONFERENCE, 1994 IEEE 44TH STOCKHOLM, SWEDEN 8-10 JUNE 1994, NEW YORK, NY, USA,IEEE, 8. Juni 1994 (1994-06-08), Seiten 338-342, XP010123099 ISBN: 0-7803-1927-3

EP 1 334 641 B1

**Beschreibung**

Die Erfindung betrifft ein Verfahren zur Verkehrslokalisierung in einem zellulären Mobilfunknetz, bei dem mindestens eine Mobilstation, mindestens eine bedienende Basisstation und Nachbarbasisstationen vorhanden sind, wobei mindestens eine Sequenz aufeinanderfolgender Berichte mit Empfangsstärken an eine Recheneinheit gemeldet werden und wobei ein zu bedienender Bereich in Rasterzellen unterteilt ist.

Ein derartiges Verfahren ist aus der internationalen Anmeldung WO 98/15149 bekannt.

Prinzipiell kann eine genaue Lokalisierung beispielsweise durch einen im Mobilteil vorhandenen GPS-Empfänger relativ genau erfolgen. Dies ist jedoch teuer und benötigt eine freie Sicht zu drei Satelliten. Neben dem aufwendigeren Mobilteil sind auch größere Veränderungen in den Basisstationen erforderlich.

Die intrazelluläre Verkehrsverteilung in Mobilfunknetzen kann nur indirekt beobachtet werden, indem man die von den Mobilstationen gemessenen RXLEV- und unter Umständen TA-Werte (timing advance) sammelt. Die RXLEV-Werte sind eine Anzahl von codierten Empfangsstärken der Basisstation und der nächsten Nachbarstationen, die für einen sogenannten Handover in Frage kommen. Die TA-Werte entsprechen der zeitlichen Verzögerung mit der die Bursts an der Basisstation empfangen werden und hängen von der Entfernung des Mobilteils von der Basisstation ab. Diese RXLEV-Werte und unter Umständen auch die TA-Werte sind jedoch wegen Fading- und Shadowing-Effekten stark verrauscht.

In den IEEE Transactions on Vehicular Technology, Vol. 48, No. 5, Sept. 1999, Seiten 1558-1562 sind einige Methoden, zum Beispiel Kalmanfilter, Neuronale Netzwerke oder Mustererkennungsverfahren auf der Basis von Hidden-Markov-Modellen als prinzipielle Lösungsansätze bei komplizierten Umgebungsbedingungen mit Shadowing usw. erwähnt.

Aus dem IEEE-Papier "New Methods for Processing GSM Radio Measurement Data: Applications for Locating, Handover, and Network Management", Vehicular Technology Conference, 1994 IEEE 44th Stockholm, SE, 8.-10.06.1994; M. Junius et al. sind Verfahren zur Verkehrslokalisation in einem zellulären Mobilfunknetz bekannt, bei denen die Zellen in Sektoren aufgeteilt sind, bei denen ein Streckenabschnitt beispielsweise durch ein Hidden-Markov-Modell beschrieben wird, wobei charakteristische Änderungen der Empfangsstärken durch die Parameter dieses Modells repräsentiert werden, und bei denen für bestimmte Streckenabschnitte erzeugte Muster von Empfangsstärken mit gemessenen Empfangsstärken verglichen werden und hieraus ein vom Mobilteilnehmer wahrscheinlich benutzter Streckenabschnitt ermittelt wird.

Aus der deutschen Offenlegungsschrift DE 199 34 845 A1 ist ein Verfahren zum Schätzen von Hidden-Markov-Modellen mit geringem Speicherbedarf bekannt.

Die nun zugrunde liegende Aufgabe besteht nun darin, ein Verfahren bzw. eine Vorrichtung anzugeben, bei dem/der, auch bei starken Störungen durch Fading und Shadowing, eine schnelle und vor allem eine genauere Lokalisierung der einzelnen Mobilstation und damit eine bessere und effizientere Analyse des Kundenverhaltens insgesamt möglich ist.

Diese Aufgabe wird hinsichtlich des Verfahrens durch die Merkmale des Patentanspruchs 1 und hinsichtlich der Vorrichtung durch die Merkmale des Anspruchs 10 erreicht.

Vorteilhafte Ausgestaltungen der Erfindung ergeben sich aus den weiteren Ansprüchen.
Ein besonderer Vorteil der Erfindung liegt in seiner hohen Auflösung, die bei Simulationen zwischen 20m und 100m lag. Die Erfindung eignet sich vor allem auch für niedrige Geschwindigkeiten, wie sie beispielsweise bei Fußgängern auftreten, oder für Bewegungen mit relativ geringer Distanz.

Die Erfindung weist insbesondere beim Auffinden von sogenannten "hot spots" in der Verkehrsverteilung Vorteile auf, da automatisch mehrere Kundenpfade überlagert werden und eine Tendenz besteht, daß Kunden an typischen Kundenpfaden gesammelt werden.

Die Grundidee der Erfindung besteht darin, eine Mobilfunkzelle in Rasterzellen zu unterteilen, ein Störmodell auf der Basis einer approximierte Gaußverteilung mit Korrelationen zu verwenden, um die Unterschiede, aufgrund von Fading und Shadowing, zwischen dem berichteten und vorhergesagten Feldstärken zu modellieren, ein Hidden-Markov-Modell für die Rasterzellen anzugeben, das die Bewegungen der Mobilfunkteilnehmer bzw. der Kunden beschreibt und die Übergangswahrscheinlichkeiten des Hidden-Markov-Modells dadurch zu ermitteln, dass der Erwartungswert der berichteten Feldstärken maximiert wird. Die stationäre Verkehrsverteilung kann aus den Übergangswahrscheinlichkeiten des Hidden-Markov-Modells errechnet werden.

Aus den Übergangswahrscheinlichkeiten des Markov-Modells und den Beobachtungswahrscheinlichkeiten des Störmodells kann aus einer Sequenz von Berichten ein höchst wahrscheinlicher Pfad eines Mobilteilnehmers ermittelt werden.

Die Erfindung wird nun anhand eines in den Zeichnungen dargestellten Ausführungsbeispiels näher erläutert.

Dabei zeigt

Figur 1 eine Anordnung einer Mobilstation und mehreren Basisstationen zur Erläuterung der Erfindung und

Figur 2     einen Ausschnitt aus einer durch Rasterzellen unterteilten Mobilfunkzelle in Form von drei solchen Rasterzellen.

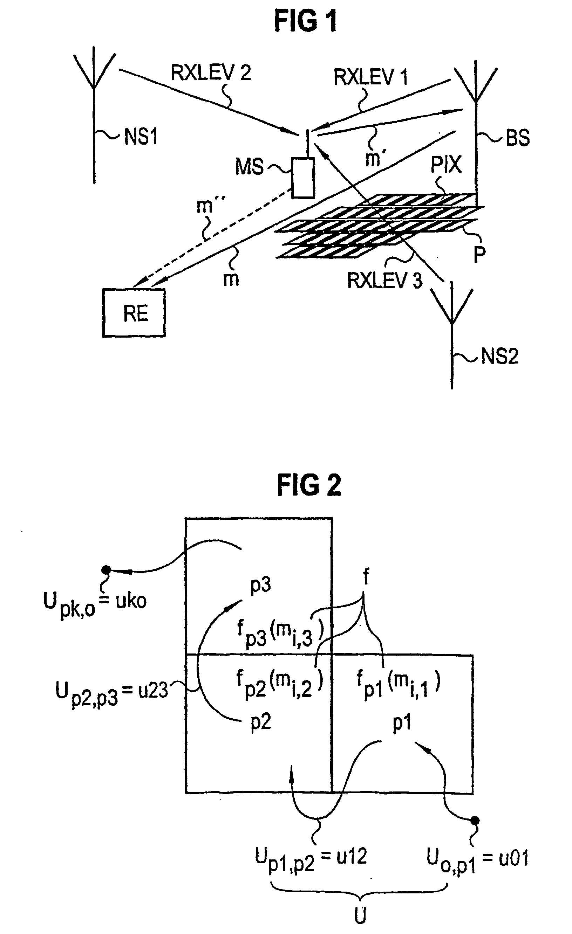

In Figur 1 ist eine Mobilstation MS, eine diese Mobilstation bedienende Basisstation BS sowie zwei zur Mobilstation nächst gelegene Basisstationen NS1 und NS2 dargestellt. Die Mobilstation MS misst Feldstärkewerte RXLEV1 der Basisstation BS Feldstärkewerte RXLEV2 der Station NS1 und Feldstärkewerte RXLEV3 der Station NS2 und meldet diese gemessene Feldstärkewerte zugeordnet zu den jeweiligen Basisstationen in Form einer Meldung m'' direkt an eine Recheneinheit RE oder alternativ in Form einer Meldung m' an eine Basisstation, z.B. die Basisstation BS, meldet, welche dann z. B. Meldungen sammelt, unter Umständen weitere Meßwerte hinzufügt und in Form einer Gesamtmeldung m an die Recheneinheit RE meldet. Diese Recheneinheit RE wird sich typischerweise in einer Basisstation befinden, kann aber auch in einer von den Basisstation räumlich getrennten Einheit oder sogar in einer mobilen Station vorhanden sein. Mindestens eine zu der bedienenden Basisstationen BS, gehörige Mobilfunkzelle ist durch ein Raster P mit einer Vielzahl von Raster oder Pixelzellen PIX weiter unterteilt. Die Größe einer solchen Rasterzelle liegt dabei typischerweise zwischen 10x10 m und 50x50 m, wobei dies beispielsweise davon abhängt, ob es sich um einen städtischen oder ländlichen Bereich handelt. Das Raster P bildet die Grundlage für ein Hidden-Markov-Model, das in der Recheneinheit RE implementiert ist.

In Figur 2 sind drei solcher Rasterzellen PIX am Beispiel von drei benachbarten Rasterzellen p1, p2 und p3 dargestellt. Zwischen diesen Rasterzellen sind Übergangswahrscheinlichkeiten u vorhanden, wobei zwischen p1 und p2 eine Übergangswahrscheinlichkeit u12 und zwischen den Zellen p2 und p3 eine Übergangswahrscheinlichkeit u23 vorhanden ist. Falls die Zelle p1 die erste Zelle eines vom Mobilfunkteilnehmer beschrittenen Pfades darstellt, besteht eine Eingangswahrscheinlichkeit u01 zum Übergang auf die erste Zelle p1. In entsprechender Weise, wenn die Zelle p3 eine letzte Zelle eines vom Mobilfunkteilnehmer beschrittenen Pfades darstellt, besteht für das Verlassen der Zelle p3 eine Ausgangswahrscheinlichkeit uk0. Darüber hinaus bestehen für jedes Pixel Beobachtungswahrscheinlichkeiten f, die zum Ausdruck bringen, mit welcher Wahrscheinlichkeit ein bestimmter Bericht von der jeweiligen Rasterzelle stammt.

Die Beobachtungswahrscheinlichkeit fp(m) =0 für nicht in Fragekommende Pixel, weil z.B. der TA-Wert diese Pixel ausschließt, und berechnet sich sonst wie folgt:

$$f_p(m) := \frac{1}{M} \exp\left(-x^T \cdot V^{-1} \cdot x / 2\right) \ ,$$

wobei der Vektor x und der transponierte Vektor $x^T$ aus den Differenzen von berichteten Feldstärkewerten aus einem jeweiligen Bericht m und zugehörigen vorausgesagten Feldstärkewerten gebildet werden. Die Matrix $V^{-1}$ ist das inverse einer Kovarianzmatrix V, die folgende Gestalt hat:

$$V = \begin{pmatrix} a+b & b & \cdots & \cdots & b \\ b & a+b & & & \\ \vdots & & \ddots & & \vdots \\ & & & & b \\ b & \cdots & & b & a+b \end{pmatrix}$$

wobei die Parameter a durch die physikalische Umgebung der jeweils betrachteten Basisstation und der Parameter b das physikalische Umfeld der Mobilstation berücksichtigt. Die Konstante M dient lediglich zur Normalisierung. Durch die oben genannten Gleichung wird ein Störungsmodell für Rasterzellen gebildet, mit dem für Rasterzellen aller relevanten Berichte Beobachtungswahrscheinlichkeiten f ermittelt werden.

Das Verhalten eines typischen Kundens oder Benutzers einer Mobilstation wird als Markov-Kette modelliert. Der Zustandsraum dieser Kette sind Rasterzellen oder Pixels eines Rasters P einer betrachteten Mobilfunkzelle und der spezielle Zustand Off. Der Kunde kann sich von einem Off-Zustand zu einem Rasterpixel, der einen beginnenden Anruf darstellt, bewegen. Der bei einem Pixel befindliche Kunde kann bei diesem Pixel verbleiben, sich zu einem Nachbarpixel bewegen oder zu einem Off-Zustand, der das Ende eines Telefongesprächs anzeigt, zurückkehren. Normalerweise gibt es nur vier Nachbarpixel: Nord, Ost, Süd und West. Falls sich die Mobilstation innerhalb einer Messzeit von bspw. 0,48 s weiter als die Größe eines Rasterelements bewegt, müssen mehr Nachbarpixel berücksichtigt werden. Dieses Modell basiert auf der Idee, dass jede Rasterzelle zu einem typischen Kundenverhalten gehört. Zum Beispiel bewegen sich Mobilstationen innerhalb eines Büros oder Wohngebäudes relativ selten, innerhalb Fußgängerbereichen bewegen sich Mobilstationen bzw. Kunden relativ langsam zu Nachbarpixeln und auf Autostraßen bewegen sich Mobilstationen häufig zu bestimmten Nachbarpixeln in Abhängigkeit der Richtung der Straße.

Ohne Vorwissen über das Kundenverhalten, abgesehen davon welche Pixel ausgehend von welchen Pixeln erreicht werden können, können aber zu Beginn Übergangswahrscheinlichkeiten wie folgt angenommen werden:

1. $u_{p,q}:=1/(h+n)$, falls das Pixel q vom Pixel p während einer Messperiode erreicht werden kann und sonst $u_{p,q}=0$.

2. $u_{p,off}:=(h+n-n')/(h+n)$, für alle Pixel des Rasters, wobei n' die Zahl der Nachbarpixel von Pixel p ist.

3. $u_{off,p} = u_{p,off} / \Sigma_{p'\in P}u_{p',0}$ für alle Pixel des Rasters P und $u_{off,off}:=0$

n ist dabei die maximale Zahl von Pixeln, die von einem festgelegten Pixel aus erreicht werden kann und h kann beispielsweise 1 gewählt werden.

Die Übergangswahrscheinlichkeiten des Markov-Modells können durch "Training" aufgrund von Berichten der betrachteten Mobilstationen verbessert bzw. den Verkehrsverhältnissen im Mobilfunknetz angepasst werden. Dabei wird ein Erwartungswert für die Berichte der beobachteten Kunden maximiert, das heißt der größte Wert für folgenden Ausdruck gesucht:

$$\sum_{all\ possible\ p_{i,j}} \overbrace{\prod_{customers\ i}}^{number\ of\ customer\ n} u_{p_{i,0},p_{i,1}} \overbrace{\prod_{reports\ j}}^{path\ i\ length\ k} f_{p_{i,j}}(m_{i,j})\, u_{p_{i,j},p_{i,j+1}}$$

Eine Variante des Baum-Welch-Algorithmus, der beispielsweise aus dem Buch von Geoffrey J. McLaughlan and Thriyambakam Krishnan mit dem Titel "The EM Algorithm and Extensions, Wiley series in probability and statistics, John Wiley and Sons, 1997, bekannt ist, löst dieses Erwartungswert-Maximierungswert-Problem auf besonders vorteilhafte Weise. Dieser Algorithmus versucht die Erwartung, dass der Kunde, welcher sich entsprechend der Markov-Kette verhält, unter den speziellen Fading-Bedingungen diese Berichte mit den Messwerten erzeugt. Dieser Algorithmus arbeitet iterativ. Er beginnt beispielsweise mit gleichförmig initialisierten Übergangswahrscheinlichkeiten. Das Ausgangsmodell korrespondiert mit der oben erwähnten Situation, wo noch kein Wissen über das Kundenverhalten vorhanden ist. Unter der Beschränkung, dass der Benutzer sich nur zu einem Nachbarpixel bewegen kann, berechnet der Algorithmus, welche Übergänge häufiger als andere sind, angezeigt durch Beobachtungswahrscheinlichkeiten $f_p(m)$ dass ein Report m von einem bestimmten Pixel p stammt. Die nächste Iteration basiert auf den neuen verbesserten Übergangswahrscheinlichkeiten.

Über den Baum-Welch-Algorithmus werden einige Zwischenvariablen wie folgt definiert:

$$\alpha^{(k)}_{i,1}(p) = u^{(k)}_{\theta,p}f_p(r_{i,1}),$$

$$\alpha^{(k)}_{i,j+1}(q) = \left(\sum_{p\in P}\alpha^{(k)}_{i,j}(p)u^{(k)}_{p,q}\right)f_q(r_{i,j+1})$$

$$\beta^{(k)}_{i,l_{(r_i)}}(p) = u^{(k)}_{p,\theta}f_p(r_{i,l_{(r_i)}}),$$

$$\beta_{i,j}^{(k)}(p) = \left(\sum_{q \in P} \beta_{i,j+1}^{(k)}(q) u_{p,q}^{(k)}\right) f_p(r_{i,j})$$

$$\xi_{i,0}^{(k)}(\theta,p) = \frac{u_{\theta,p}^{(k)} \beta_{i,1}^{(k)}(p)}{\Sigma_{p' \in P} u_{\theta,p'}^{(k)} \beta_{i,1}^{(k)}(p')}$$

$$\xi_{i,j}^{(k)}(p,q) = \frac{\alpha_{i,j}^{(k)}(p) u_{p,q}^{(k)} \beta_{i,j+1}^{(k)}(q)}{\Sigma_{p' \in P} \Sigma_{q' \in P} \alpha_{i,j}^{(k)}(p') u_{p',q'}^{(k)} \beta_{i,j+1}^{(k)}(q')}$$

$$\xi_{i,j}^{(k)}(p,\theta) := 0$$

$$\xi_{i,l(r_i)}^{(k)}(p,\theta) := \frac{\alpha_{i,l(r_i)}^{(k)}(p) u_{p,\theta}^{(k)}}{\Sigma_{p' \in P} \alpha_{i,l(r_i)}^{(k)}(p') u_{p',\theta}^{(k)}}$$

$$\xi_{i,l(r_i)}^{(k)}(p,q) := 0.$$

$\alpha$ bzw. $\beta$ sind dabei Wahrscheinlichkeiten, dass der i-te Benutzer Messwerte $m_{i,1},...,m_{i,j}$ bzw. $m_{i,j},...,m_{i,l(ri)}$ berichtet und sich in Pixel p befindet, wenn er einen j-ten Bericht sendet, wobei l(ri) die Nummer des letzten Berichts in der i-ten Sequenz darstellt. Der Buchstabe $\Theta$ bedeutet den Off-Zustand. Die Variable $\xi$ ist die Wahrscheinlichkeit, dass sich der i-te Benutzer sich beim Pixel p befindet während er seinen j-ten Bericht sendet und sich dann zum Nachbarpixel q bewegt. Sind die Variablen $\xi$ berechnet, so sind die neuen Übergangswahrscheinlichkeiten wie folgt definiert.

$$u_{\theta,p}^{(k+1)} = \frac{\sum_{i=1}^{n} \xi_{i,0}^{(k)}(\theta,p)}{\sum_{p' \in P} \sum_{i=1}^{n} \xi_{i,0}^{(k)}(\theta,p')}$$
$$= \frac{1}{n} \sum_{i=1}^{n} \xi_{i,0}^{(k)}(\theta,p) \qquad \text{for } p \in P$$

$$u_{p,q}^{(k+1)} = \frac{\sum_{i=1}^{n} \sum_{j=1}^{l(r_i)} \xi_{i,j}^{(k)}(p,q)}{\sum_{q' \in P \cup \{\theta\}} \sum_{i=1}^{n} \sum_{j=1}^{l(r_i)} \xi_{i,j}^{(k)}(p,q')}$$

for $p \in P$ and $q \in P \cup \{\theta\}$.

Es kann gezeigt werden, dass die neuen Übergangswahrscheinlichkeiten eine erhöhte Erwartung aufweisen. Durch Iteration der Berechnung der Zwischenvariablen und das Updaten von Übergangswahrscheinlichkeiten erhöht die Beobachtungswahrscheinlichkeiten. Es stellte sich heraus, das 10 bis 50 Iterationen für eine angenäherte numerische Konvergenz üblicherweise ausreichen.

Die Zwischenvariablen $\xi$ in der letzten Iteration können auch zur Berechnung der stationären Verteilung der Markov-Kette ohne Mehraufwand herangezogen werden. Die Wahrscheinlichkeit $\pi_p$ dass ein bestimmter Kunde einen Bericht von Pixel p sendet, ergibt sich aus folgender Formel:

$$\pi_p^{\text{steady}-\text{state}} = \frac{\sum_{i=1}^{n} \sum_{j=1}^{l(r_i)} \sum_{q \in P \cup \{\theta\}} \xi_{i,j}(p, q)}{\sum_{i=1}^{n} \sum_{j=1}^{l(r_i)} \sum_{p' \in P} \sum_{q \in P \cup \{\theta\}} \xi_{i,j}(p', q)}.$$

Es kann nicht nur eine Wahrscheinlichkeit angegeben werden, mit der ein Kunde seinen Bericht von einem bestimmten Pixel aus sendet, sondern es können auch höchst wahrscheinliche Pfade eines Kunden bzw. eines oder mehrerer Mobilstationen ermittelt werden. Hierzu wird für einen Pfad $p_1,...,p_k$ die Wahrscheinlichkeit, dass die Sequenz von Berichten $m_1,...,m_k$ für ein festgelegtes Störungs- und Kundenmodell also für festgelegte Beobachtungswahrscheinlichkeiten und Übergangswahrscheinlichkeiten maximiert wird. Das Problem besteht also darin, einen Pfad $p_1,..., p_k$ zu finden, der die größte Wahrscheinlichkeit hat, das heißt den folgenden Wert maximiert:

$$H(p_1, p_2,..., p_k) = u_{p_0, p_1} \prod_{\substack{path \ length \ k \\ reports \ j}} f_{p_j}(m_j) \, u_{p_j, p_{j+1}} \quad ,$$

mit $p_0 := p_{k+1} := \Theta :=$ off.

Dieses Problem kann mit dem in der Nachrichtentechnik an sich wohl bekannten Viterbi-Algorithmus gelöst werden. Dieser Algorithmus wird hier wie folgt angewendet:

Eine Initialisierung für eine gegebene Folge von Berichten r= $(m_i,....,m_k)$ erfolgt durch Setzen von $\delta_k(p) = u_{p,\text{off}} \, f_p(m_k)$ für Pixel des Rasters. Dann erfolgt eine iterative Definition für j=1(r)-1,..., und Pixel des Rasters.

$$\delta_j(p) \quad := \quad f_p(m_j) \max_{q \in P} \{u_{p,q} \delta_{j+1}(q)\}$$

$$\psi_j(p) \quad := \quad \arg \max_{q \in P} \{u_{p,q} \delta_{j+1}(q)\}.$$

Der optimale Pfad $p^*_1,...,p^*_k$ ergibt sich durch Rückverfolgung der besten jeweiligen Auswahl durch

$$p_1^* \quad := \quad \arg \max_{p \in P} \{u_{\theta,p} \delta_1(p)\}$$

$$p_j^* := \psi_{j-1}(p_{j-1}^*) \text{ for } j = 2,...,l(r).$$

Diese Informationen können genutzt werden, um die Qualität der Dienste durch eine Optimierung der Einstellung zu verbessern, Problemzonen und -ursachen zu erkennen und zu beseitigen, notwendige Erweiterungen der Hardware zu planen und, als Fernziel, auf prekäre Lastsituationen in Echtzeit zu reagieren. Darüberhinaus können ortsabhängige Dienste für einzelne Kunden angeboten werden.

**Patentansprüche**

1. Verfahren zur Verkehrslokalisierung in einem zellulären Mobilfunknetz,

- bei dem mindestens eine Mobilstation (MS), mindestens eine bedienende Basisstation (BS) und Nachbarbasisstationen (NS1, NS2) vorhanden sind,
- mindestens eine Sequenz aufeinanderfolgender Berichte mit Empfangsstärken (RXLEV1.. RXLEV3) an dem mindestens einen Mobilteil und/oder an der bedienenden Basisstation an eine Recheneinheit (RE) gemeldet werden,

- bei dem mindestens ein durch die mindestens eine Basisstation bedienter Bereich in einzelne Rasterzellen (PIX, p1, p2, p3) unterteilt wird,

- bei dem mit Hilfe eines Störungsmodells für Rasterzellen aller relevanten Berichte Beobachtungswahrscheinlichkeiten (f) ermittelt werden und

- bei dem Eingangs-, Ausgangs- und/oder Übergangswahrscheinlichkeiten für die Rasterzellen derart bestimmt werden, dass ein Erwartungswert für die mindestens eine Sequenz von aufeinanderfolgenden Berichten durch verändern der Eingangs-, Ausgangs- und/oder Übergangswahrscheinlichkeiten maximiert wird, wobei der zu maximierender Erwartungswert dadurch definiert ist,

  -- dass für eine Sequenz aufeinanderfolgender Berichte und für alle Pfade der selben Länge (k) das Produkt aus den Beobachtungswahrscheinlichkeiten (f) und den jeweiligen angenommenen Übergangswahrscheinlichkeiten (u) zwischen den Rasterzellen des Pfades gebildet wird,

  -- das alle diese Produkte mit einer Eingangs- und Ausgangsübergangswahrscheinlichkeit (u01, uk0) für die erste bzw. letzte Rasterzelle des Pfades zu einem ersten Gesamtprodukt multipliziert werden,

  -- dass die ersten Gesamtprodukte für alle Sequenzen von aufeinanderfolgenden Berichten miteinander zu einem zweiten Gesamtprodukt multipliziert werden und

  -- dass die zweiten Gesamtprodükte für alle möglichen Pfade zum jeweiligen Erwartungswert aufsummiert werden.

2. Verfahren nach Anspruch 1,
bei dem der Erwartungswert für die Berichte nach einer Variante des Baum-Welch-Algorithmus maximiert wird.

3. Verfahren nach Anspruch 2,
bei dem die Verkehrverteilung ($\pi$) aus Zwischenwerten des Baum-Welch-Algorithmus errechnet wird.

4. Verfahren nach einem der Ansprüche 1 oder 2,
bei dem die Verkehrverteilung ($\pi$) und/oder für Rasterpunkte die ungefähre Geschwindigkeitsverteilung aus den Eingangs-, Ausgangs- und Übergangswahrscheinlichkeiten (u) errechnet wird.

5. Verfahren nach einem der Ansprüche 1 oder 2,
bei dem aus einer jeweiligen Distanz und der Zeit zwischen den Rasterelementen zweier aufeinanderfolgender Berichte eine jeweilige ungefähre Geschwindigkeit der Mobilstation errechnet wird.

6. Verfahren zur Verkehrslokalisierung in einem zellulären Mobilfunknetz nach Anspruch 1,

- bei dem ein größtwahrscheinlicher Pfad zu einer Sequenz aufeinanderfolgender Berichte dadurch gefunden wird, dass eine Gesamtwahrscheinlichkeit durch Verändern der Pfade maximiert wird, wobei die zu maximierende Gesamtwahrscheinlichkeit eines Pfades dadurch definiert ist,

  -- dass für alle aufeinanderfolgenden Berichte und für alle Pfade der selben Länge (k) das Produkt aus den Beobachtungswahrscheinlichkeiten (f) und den jeweiligen angenommenen Übergangswahrscheinlichkeiten (u) zwischen den Rasterzellen des Pfades gebildet wird und

  -- das alle diese Produkte zur Bildung der Gesamtwahrscheinlichkeit mit einer Eingangs- und Ausgangsübergangswahrscheinlichkeit (u01, uk0) für die erste bzw. letzte Rasterzelle des Pfades multipliziert werden.

7. Verfahren nach Anspruch 6,
bei dem der größtwahrscheinlichen Pfad einer Sequenz von aufeinanderfolgenden Berichte der mindestens einen Mobilstation durch eine Variante des Viterbi-Algorithmus gebildet wird.

8. Verfahren nach einem der Ansprüche 6 oder 7,
bei dem für einzelne oder mindestens eine Gruppe von Sequenzen von aufeinanderfolgenden Berichten und Mobilstationen über eine bestimmte Zeitdauer größtwahrscheinliche Pfade der jeweiligen Sequenz und Mobilstation getrennt erfasst werden.

9. Verfahren nach einem der vorhergehenden Ansprüche,

bei dem mit Hilfe eines Störungsmodells für eine jeweilige in Frage kommende Rasterzelle eine Beobachtungswahrscheinlichkeit (f) derart ermittelt wird,

-- dass Differenzen von gemessenen Empfangsstärken und vorhergesagten Empfangstärken für eine jeweilige Rasterzelle zu einem Vektor (x) zusammengefasst werden,
-- dass das Inverse einer Kovarianzmatrix, die die typischen zweiten Momente des Vektors (x) an der jeweiligen Rasterzelle charakterisiert, von links mit dem transponierten und rechts mit dem Vektor selbst sowie mit dem Faktor -1/2 multipliziert wird,
-- dass für das so erhaltene Produkt der zugehörige Wert einer Exponentialfunktion berechnet und dieses Ergebnis anschließend durch eine Konstante normalisiert wird.

**10.** Vorrichtung zur Verkehrslokalisierung in einem zellulären Mobilfunknetz,

- bei der mindestens eine Mobilstation (MS), mindestens eine bedienende Basisstation (BS) und Nachbarbasisstationen (NS1, NS2) derart vorhanden ist, bei der eine Recheneinheit (RE) vorhanden ist, an die mindestens eine Sequenz aufeinanderfolgender Berichte mit Empfangsstärken (RXLEV1.. RXLEV3) an der mindestens einen Mobilstation und/oder an der bedienenden Basisstation gemeldet werden,
- bei der mindestens ein durch die mindestens eine Basisstation bedienter Bereich vorhanden ist, der in einzelne Rasterzellen (PIX, p1, p2, p3) unterteilt ist,
- bei der ein Störungsmodell zur Ermittlung von Beobachtungswahrscheinlichkeiten (f) für alle Rasterzellen relevanter Berichte vorhanden ist,
- bei der ein Mittel zur Bestimmung von Eingangs-, Ausgangs- und/oder Übergangswahrscheinlichkeiten zwischen den Rasterzellen vorhanden ist und
- bei der Mittel zur Maximierung eines Erwartungswertes für die Berichte der mindestens einen Mobilstation (MS) vorhanden sind, wobei dies durch Verändern der Eingangs-, Ausgangs- und/oder Übergangswahrscheinlichkeiten erfolgt und wobei der jeweils zu maximierender Erwartungswert dadurch definiert ist,

-- dass für eine Sequenz aufeinanderfolgenden Berichte und für alle Pfade der selben Länge (k) das Produkt aus den Beobachtungswahrscheinlichkeiten (f) und den jeweiligen angenommenen Übergangswahrscheinlichkeiten (u) zwischen den Rasterzellen des Pfades gebildet wird,
-- das alle diese Produkte mit einer Eingangs- und Ausgangsübergangswahrscheinlichkeit (u01, uk0) für die erste bzw. letzte Rasterzelle des Pfades zu einem ersten Gesamtprodukt multipliziert werden,
-- dass die ersten Gesamtprodukte für alle Sequenzen von aufeinanderfolgenden Berichten miteinander zu einem zweiten Gesamtprodukt multipliziert werden und
-- dass die zweiten Gesamtprodukte für alle möglichen Pfade zum jeweiligen Erwartungswert aufsummiert werden.

**11.** Vorrichtung zur Verkehrslokalisierung in einem zellulären Mobilfunknetz nach Anspruch 10,

- bei dem ein Mittel zum Finden eines größtwahrscheinlichen Pfades der mindestens einen Mobilstation vorhanden ist, das den jeweiligen größtwahrscheinlichen Pfad dadurch findet, dass eine Gesamtwahrscheinlichkeit durch Verändern der Pfade maximiert wird, wobei die jeweils zu maximierende Gesamtwahrscheinlichkeit dadurch definiert ist,

-- dass für alle aufeinanderfolgenden Berichte und für alle Pfade der selben Länge (k) das Produkt aus den Beobachtungswahrscheinlichkeiten (f) und den jeweiligen angenommenen Übergangswahrscheinlichkeiten (u) zwischen den Rasterzellen des Pfades gebildet wird und
-- dass alle diese Produkte zur Bildung der Gesamtwahrscheinlichkeit mit einer Eingangs- und Ausgangsübergangswahrscheinlichkeit (u01, uk0) für die erste bzw. letzte Rasterzelle des Pfades multipliziert werden.

**Claims**

**1.** Method for traffic localization in a cellular mobile radio network,

- whereby at least one mobile station (MS), at least one serving base station (BS) and adjacent stations (NS1, NS2) are present,

- at least one sequence of successive reports with reception strengths (RXLEV1.. RXLEV3) is transmitted to a data processor (RE) at the mobile part, of which there is at least one, and/or at the serving base station,
- whereby at least one area served by at least one base station is subdivided into single grid cells (FIX, p1, p2, p3),
- whereby observed probabilities (f) for grid cells of all relevant reports are determined with the aid of an interference model and
- whereby the entrance, exit and/or transition probabilities for the grid cells are determined in such a way that an expected value for at least one sequence of successive reports is maximized by changing the entry, exit and/or transition probabilities, with the expected value to be maximized being thus defined,

  -- for a sequence of successive reports and for all paths of the same length (k) the product of the observed probabilities (f) and the particular assumed transition probabilities (u) between the grid cells of the path is formed,
  -- all these products are multiplied by an entry and exit transition probability (u01, uk0) for the first or last grid cell of the path to form a first total product,
  -- the first total products for all sequences of successive reports are multiplied by each other to form a second total product and
  -- the second total products for all possible paths are totalized to form the relevant expected value.

2. Method in accordance with claim 1,
   whereby the expected value is maximized for the reports in accordance with a variant of the Baum-Welch algorithm.

3. Method in accordance with claim 2,
   whereby the traffic distribution ($\pi$) is calculated from the intermediate values of the Baum-Welch algorithm.

4. Method in accordance with one of claims 1 or 2,
   whereby the traffic distribution ($\pi$) and/or for grid points the approximate speed distribution is calculated from the entry, exit and transition probabilities (u).

5. Method in accordance with one of claims 1 or 2,
   whereby a particular approximate speed of the mobile station is calculated from a relevant distance and the time between the grid elements of two successive reports.

6. Method for traffic localization in a cellular mobile network in accordance with claim 1,

   - with a path of greatest probability for a sequence of successive reports being found so that a total probability is maximized by changing the path, whereby the total probability of maximization of a path is defined in that,

     -- for all successive reports and for all paths of the same length (k) the product of the observed probabilities (f) and the relevant assumed transition probabilities (u) between the grid cells of a path is formed and
     -- all these products are multiplied by an entry and exit transition probability (u01, uk0) for the first or last grid cell of the path in order to form the total probability.

7. Method in accordance with claim 6,
   with the path of greatest probability of a sequence of successive reports of at least one mobile station being formed by using a variant of the Viterbi algorithm.

8. Method in accordance with one of claims 6 or 7,
   whereby for single or at least one group of sequences of successive reports and mobile stations the paths of greatest probability of the relevant sequence and mobile station are found separately over a specific time period.

9. Method in accordance with one of the preceding claims, whereby with the aid of an interference model for a relevant grid cell under consideration an observed probability (f) is determined in such a way

   -- that differences in measured reception strengths and predicted reception strengths for a particular grid cell are combined to form a vector (x),
   -- that the inverse of a covariant matrix that characterizes the typical second moments of the vector (x) at the particular grid cell is multiplied from the left by the transposed vector and from the right by the vector itself and by the factor -1/2,

-- that the associated value of an exponential function is calculated for the product obtained in this way and the result is then normalized by a constant.

**10.** Device for traffic localization in a cellular mobile radio network,

- whereby at least one mobile station (MS), at least one serving base station (BS) and adjacent base stations (NS1, NS2) are present in such a way that a data processing unit (RE) is present, to which at least one sequence of successive reports containing reception strengths (RXLEV1.. RXLEV3) is signaled at the mobile station, of which there is at least one, and/or at the serving base station,

- whereby at least one area served by at least one base station is present, said area being subdivided into individual grid cells (FIX, p1, p2, p3),

- whereby an interference model for determining observed probabilities (f) for all grid cells of relevant reports is present,

- whereby a means for determining entry, exit and/or transition probabilities is present between the grid cells and

- whereby means for maximizing an expected value for the reports of at least one mobile station (MS) are present, whereby this takes place by changing the entry, exit and/or transition probabilities and whereby the expected value to be maximized in each case is defined in that,

-- for a sequence of successive reports and for all paths of the same length (k) the product of the observed probabilities (f) and the relevant assumed transition probabilities (u) between the grid cells of the path is formed,

-- all these products are multiplied by an entry and exit transition probability (u01, uk0) for the first or last grid cell of the path in order to form a first total product,

-- the first total products for all sequences of successive reports are multiplied by each other to form a second total product and

-- the second total products for all possible paths are totalized to form the relevant expected value.

**11.** Device for traffic localizing in a cellular mobile radio network in accordance with claim 10,

- whereby a means for finding a path of greatest probability of at least one mobile station is present, that finds the particular path of greatest probability so that a total probability is maximized by changing the paths, whereby the particular total probability to be maximized is defined in that

-- for all successive reports and for all paths of the same length (k) the product of the observed probabilities (f) and the particular assumed transition probabilities (u) between the grid cells of the path is formed and

-- to form the total probability, all these products are multiplied by an entry and exit transition probability (u01, uk0) for the first or last grid cell of the path.

**Revendications**

**1.** Procédé de localisation de trafic dans un réseau radio mobile cellulaire, dans lequel

- au moins une station mobile (MS), au moins une station de base de commande (BS) et des stations de base voisines (NS1, NS2) sont présentes,

- au moins une séquence de rapports successifs avec des niveaux de réception (RXLEV1 ... RXLEV3) au niveau de l'au moins une unité mobile et/ou de la station de base de commande est signalée à une unité de calcul (RE),

- au moins une zone desservie par l'au moins une station de base est subdivisée en cellules de grille individuelles (PIX, p1, p2, p3),

- des probabilités d'observation (f) sont établies à l'aide d'un modèle de perturbation pour des cellules de grille de tous les rapports pertinents et

- des probabilités d'entrée, de sortie et/ou de transfert pour les cellules de grille sont déterminées de manière telle qu'une valeur attendue pour l'au moins une séquence de rapports successifs est maximisée par modification des probabilités d'entrée, de sortie et/ou de transfert, la valeur attendue à maximiser étant définie par le fait que

-- le produit tiré des probabilités d'observation (f) et des probabilités de transfert respectives supposées (u) entre les cellules de grille du chemin est constitué pour une séquence de rapports successifs et pour tous les chemins de même longueur (k),

-- tous ces produits sont multipliés par une probabilité de transfert d'entrée et de sortie (u01, uk0) respectivement pour la première et pour la dernière cellule de grille du chemin pour obtenir un premier produit global,

-- les premiers produits globaux sont multipliés entre eux pour toutes les séquences de rapports successifs pour obtenir un deuxième produit global et

-- les deuxièmes produits globaux sont additionnés pour obtenir la valeur attendue respective pour tous les chemins possibles.

2. Procédé selon la revendication 1,
dans lequel la valeur attendue pour les rapports est maximisée selon une variante de l'algorithme de Baum-Welch.

3. Procédé selon la revendication 2,
dans lequel la répartition du trafic ($\pi$) est calculée sur la base de valeurs intermédiaires de l'algorithme de Baum-Welch.

4. Procédé selon l'une des revendications 1 ou 2,
dans lequel la répartition du trafic ($\pi$) et/ou pour des points de grille la répartition approximative de la vitesse est calculée sur la base des probabilités d'entrée, de sortie et de transfert (u).

5. Procédé selon l'une des revendications 1 ou 2,
dans lequel une vitesse approximative respective de la station mobile est calculée sur la base de la distance respective et du temps entre les éléments de grille de deux rapports successifs.

6. Procédé de localisation de trafic dans un réseau radio mobile cellulaire selon la revendication 1, dans lequel

- un chemin le plus probable est trouvé, pour une séquence de rapports successifs, par le fait qu'une probabilité globale est maximisée par modification des chemins, la probabilité globale d'un chemin, laquelle est à maximiser, étant définie par le fait que

-- le produit tiré des probabilités d'observation (f) et des probabilités de transfert respectives supposées (u) entre les cellules de grille du chemin est constitué pour tous les rapports successifs et pour tous les chemins de même longueur (k),

-- pour la formation de la probabilité globale, tous ces produits sont multipliés par une probabilité de transfert d'entrée et de sortie (u01, uk0) respectivement pour la première et pour la dernière cellule de grille du chemin.

7. Procédé selon la revendication 6,
dans lequel le chemin le plus probable d'une séquence de rapports successifs de l'au moins une station mobile est constitué par une variante de l'algorithme de Viterbi.

8. Procédé selon l'une des revendications 6 ou 7,
dans lequel des chemins les plus probables de la séquence et de la station mobile respectives sont détectés séparément sur une durée de temps déterminée pour des séquences individuelles ou au moins un groupe de séquences de rapports successifs et de stations mobiles.

9. Procédé selon l'une des revendications précédentes,
dans lequel est déterminée, à l'aide d'un modèle de perturbation, pour une cellule de grille respectivement envisageable, une probabilité d'observation (f) de manière telle que

-- les différences entre niveaux de réception mesurés et niveaux de réception prédits sont regroupées en un vecteur (x) pour une cellule de grille respective,

-- l'inverse d'une matrice de covariance qui caractérise les deuxièmes moments typiques du vecteur (x) au niveau de la cellule de grille respective est multiplié par le vecteur transposé en partant de la gauche et par le vecteur lui-même à droite ainsi que par le facteur $-\frac{1}{2}$,

-- pour le produit ainsi obtenu, la valeur associée d'une fonction exponentielle est calculée et ce résultat est ensuite normalisé par une constante.

10. Dispositif de localisation de trafic dans un réseau radio mobile cellulaire, dans lequel

- au moins une station mobile (MS), au moins une station de base de commande (BS) et des stations de base voisines (NS1, NS2) sont présentes, dans lequel une unité de calcul (RE) est présente, à laquelle est signalée au moins une séquence de rapports successifs avec des niveaux de réception (RXLEV1 ... RXLEV3) au niveau de l'au moins une unité mobile et/ou de la station de base de commande,
- au moins une zone desservie par l'au moins une station de base est présente, laquelle est subdivisée en cellules de grille individuelles (PIX, p1, p2, p3),
- un modèle de perturbation est présent pour établir des probabilités d'observation (f) pour toutes les cellules de grille de rapports pertinents,
- un moyen de détermination de probabilités d'entrée, de sortie et/ou de transfert entre les cellules de grille est présent et
- des moyens de maximisation d'une valeur attendue pour les rapports de l'au moins une station mobile (MS) sont présents, ceci se faisant par modification des probabilités d'entrée, de sortie et/ou de transfert et la valeur attendue à maximiser dans chaque cas étant définie par le fait que

-- le produit tiré des probabilités d'observation (f) et des probabilités de transfert respectives supposées (u) entre les cellules de grille du chemin est constitué pour une séquence de rapports successifs et pour tous les chemins de même longueur (k),
-- tous ces produits sont multipliés par une probabilité de transfert d'entrée et de sortie (u01, uk0) respectivement pour la première et pour la dernière cellule de grille du chemin pour obtenir un premier produit global,
-- les premiers produits globaux sont multipliés entre eux pour toutes les séquences de rapports successifs pour obtenir un deuxième produit global et
-- les deuxièmes produits globaux sont additionnés pour obtenir la valeur attendue respective pour tous les chemins possibles.

11. Dispositif de localisation de trafic dans un réseau radio mobile cellulaire selon la revendication 10, dans lequel

- est présent un moyen pour trouver un chemin le plus probable de l'au moins une station mobile, lequel trouve le chemin respectivement le plus probable par le fait qu'une probabilité globale est maximisée par modification des chemins, la probabilité globale à maximiser dans chaque cas étant définie par le fait que

-- le produit tiré des probabilités d'observation (f) et des probabilités de transfert respectives supposées (u) entre les cellules de grille du chemin est constitué pour tous les rapports successifs et pour tous les chemins de même longueur (k),
-- pour la formation de la probabilité globale, tous ces produits sont multipliés par une probabilité de transfert d'entrée et de sortie (u01, uk0) respectivement pour la première et pour la dernière cellule de grille du chemin.

# FIG 1

# FIG 2